# EUROPEAN PATENT SPECIFICATION

(11) **EP 2 506 182 B1**
(45) Date of publication and mention of the grant of the patent: **27.04.2016**
(21) Application number: 12160754.3
(22) Date of filing: 22.03.2012
(51) Int. Cl.: G06F 21/79

(54) **Mobile terminal, memory card socket and method of writing protection for memory card in the mobile terminal**
Mobiles Endgerät, Speicherkartenbuchse und Verfahren zum Schreiben eines Schutzes für die Speicherkarte in einem mobilen Endgerät
Terminal mobile, prise pour carte mémoire et procédé de protection contre l'écriture pour carte mémoire dans le terminal mobile

(30) Priority: 28.03.2011 CN 201110076055; 21.03.2012 US 201213425557
(43) Date of publication of application: 03.10.2012
(73) Proprietor: Sony Ericsson Mobile Communications AB, 221 88 Lund (SE)
(72) Inventor: Liu, Yinong, 100102 Beijing (CN); Li, Lingchang, 100102 Beijing (CN); Tian, Xiyong, 100102 Beijing (CN)
(74) Representative: Valea AB

(56) References cited:
- WO-A1-2010/061475
- Brad Fitzpatrick: "brad's life - memory stick unmount on capacitance sensor press", , 15 March 2007 (2007-03-15), XP55031894, Retrieved from the Internet: URL:http://brad.livejournal.com/2300433.ht ml [retrieved on 2012-07-05]

## Description

### Technical Field

The present invention relates to the field of electronic technology, and particularly, to a mobile terminal, a memory card socket and a method of writing protection for a memory card in the mobile terminal.

### Description of the Related Art

A smart phone with an independent operating system, used like a personal computer, can support the user to self-install programs such as software and games provided by a third party service provider, and can continually extend the functions of the smartphone through such programs. Thus the smartphone becomes more and more popular. Since various software may be self-installed by the user, the inherent memory (sometimes referred to as internal memory) of the phone often cannot meet the demand on the memory space. Thus the smart phone is usually provided with a memory card socket, so as to expand the memory space of the smart phone by inserting a pluggable memory card into the memory card socket. Thus the pluggable memory card is of vital importance to the smart phone. In the current market, conventional memory cards for the smart phone for example include Multimedia Card (MMC), Secure Digital Memory Card (SD card), TransFlash (TF) card, etc., in which the SD card includes standard SD card, Elite Pro high speed card, miniSD card (also called as uSD card) and ultra speed SD card, etc.

In the operating system versions (e.g., Android 2.2 and above) of some smart phones, the application programs of the internal flash can be written into the pluggable memory card. If the memory card is pulled out during a process of writing the programs thereinto, at least part of the data will not be successfully written into the memory card during the above process. Thus a data loss may be caused and the memory card may be unusable, i.e., the memory card has a risk of being damaged, and the return rate of the memory card is increased.

WO2010061475 discloses an electronic apparatus configured to require no additional component for the sampling detection of external components so as to suppress the increase of costs. In an electronic apparatus provided with a front panel where an electrostatic switch is arranged and a loading slot is made so that a memory card can be inserted into, and can be taken from, the loading slot. When a main microcomputer detects that operation information operated by detecting the approach or contact by a finger or the like of a user which an electrostatic switch controller outputs to each of a plurality of electrostatic switches is concurrent operation information concurrently output from a plurality of electrostatic switches at a position where the loading slot is held. The main microcomputer judges based on the concurrent operation information that the memory card inserted in the loading slot is about to be taken out and controls a plurality of operation means not to execute individual functions added to the operation means.

At http://brad.livejournal.com/2300433.html, retrieved on 2012-07-05, titled "Brad's life - memory stick un-mount on capacitance sensor press", it is disclosed that memory sticks should have capacitance touch sensors. So when a memory stick is grabbed to be pulled out, the memory stick will send a message, over USB, informing a host that the memory stick appears to be pulled out. The host can then use the message to quickly un-mount the memory stick, flushing buffers, etc.

### Summary of the Invention

The present invention is proposed in view of the above problem in the prior art. The present invention is related to providing a mobile terminal, a memory card socket and a method of writing protection for a memory card in the mobile terminal capable of stopping writing data into the memory card in time when the memory card is pulled out, so as to effectively provide a protection of the writing operation on the memory card.

According to an aspect of the present invention, a mobile terminal is provided, comprising a memory card socket accommodating a pluggable memory card, the memory card socket externally provided with a metal shielding structure; the mobile terminal further comprising: a touch capacitance sensor connected to the metal shielding structure of the memory card socket and configured to sense a capacitance via the metal shielding structure; and a write control unit configured to determine whether the metal shielding structure is touched by a finger based on the capacitance sensed by the touch capacitance sensor, and prohibit data being written into the memory card when it is determined that the metal shielding structure is touched by a finger.

According to another aspect, the write control unit is configured to determine that the metal shielding structure is touched by a finger when the capacitance sensed by the touch capacitance sensor is larger than a predetermined first threshold; or the write control unit is configured to determine that the metal shielding structure is touched by a finger when an increment of the capacitance currently sensed by the touch capacitance sensor in relation to a previously sensed capacitance is larger than a predetermined second threshold.

According to another aspect, the write control unit is further configured to allow data to be written into the memory card when it is determined that the metal shielding structure is not touched by a finger.

According to another aspect, the touch capacitance sensor and the write control unit are disposed in a printed circuit board of the mobile terminal.

According to another aspect of the present invention, a method of writing protection for a memory card in a mobile terminal is provided, the method comprising: a capacitance sensing step: sensing a capacitance via a metal shielding structure on a card socket of the memory card; a determining step: determining whether the metal shielding structure is touched by a finger according to the capacitance sensed in the capacitance sensing step; and a writing protection step: prohibiting data being written into the memory card when the determining step determines that the metal shielding structure is touched by a finger.

According to another aspect, the writing protection step further comprising: allowing data to be written into the memory card when the determining step determines that the metal shielding structure is not touched by a finger.

According to another aspect, in the determining step, determining that the metal shielding structure is touched by a finger when the capacitance sensed in the capacitance sensing step is larger than a predetermined first threshold; or determining that the metal shielding structure is touched by a finger when an increment of the capacitance sensed in the capacitance sensing step in relation to a previously sensed capacitance is larger than a predetermined second threshold.

According to another aspect of the present invention, a memory card socket is provided, comprising: a card socket frame, a metal shielding structure and contact pins; the contact pins are embedded in the card socket frame, and the card socket frame and the metal shielding structure are oppositely arranged to form a card slot accommodating a memory card; the metal shielding structure is connected to a connector that connects the touch capacitance sensor in the mobile terminal.

According to another aspect, the connector is a metal bent portion integrally formed with the metal shielding structure.

According to another aspect, the connector is a metal connector integrally formed with the card socket frame.

According to various aspects of the present invention, the capacitance variation caused when a finger touches the metal shielding structure is used to identify whether the metal shielding structure is touched by the finger, so as to timely and effectively provide a writing protection for the pluggable memory card when it is identified that the metal shielding structure is touched by the finger, which avoids data from being written into the memory card when the memory card is pulled out from the memory card socket by the finger. Thus the damage of the memory card and the non-operation of the application program caused by the data writing error can be prevented, the data writing security of the memory card is improved, and the repair rate of the memory card is effectively reduced.

Features described and/or illustrated with respect to one embodiment can be used in one or more other embodiments in a same or similar way, and/or combine with or replace features in other embodiments.

To be noted, the terms "include/comprise/have" herein refer to existence of feature, component, step and assembly, not excluding existence or addition of one or more other features, components, steps, assemblies or a combination thereof.

Many aspects of the present invention can be understood better with reference to the following drawings. The constituent parts of the drawings are not necessarily drafted in proportion or to scale, but are presented just for illustrating the present invention more clearly. For the convenience of illustrating and describing some parts of the present invention, and promoting the understanding of the embodiments, some parts of the drawings may be enlarged, e.g., enlarging those parts with respect to other parts in an exemplary apparatus practically manufactured according to the present invention. Elements and features described in a drawing or embodiment of the present invention can be combined with elements and features illustrated in one or more other drawings or embodiments. In addition, same or corresponding reference signs are used to represent same or corresponding constituent parts in all the drawings, and they also can be used to represent same or corresponding constituent parts in more than one of the embodiments. Primed (') reference numerals may be used to designate parts that are similar to parts that are designated by the same unprimed reference numeral.

### Brief Description of the Drawings

The accompanying drawings constitute a part of the specification, illustrate the embodiments of the present invention and together with the description serve to explain the present invention. The drawings described as follows illustrate several exemplary embodiments of the present invention, and a person skilled in the art can obtain other drawings based on these drawings without paying any creative effort. In the drawings:
Fig. 1 is a schematic diagram of a mobile phone according to an embodiment of the present invention;
Fig. 2 is a system structural diagram of a mobile phone according to an embodiment of the present invention;
Fig. 3 is a flowchart of a method of writing protection for a memory card according to another embodiment of the present invention;
Fig. 4 is a perspective view of a structure of a push-pull type memory card socket;
Fig. 5 is an exploded view of the structure of the memory card socket in Fig. 4;
Fig. 6 is a perspective view of a structure of a hinge type memory card socket; and
Fig. 7 is an exploded view of the structure of the memory card socket in Fig. 6.

### Detailed Description of the Preferred Embodiments

These and further aspects and features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

To be noted, in order to avoid the present invention from being vague due to unnecessary details, the drawings only illustrate device structure and/or processing step closely associated with the solution of the present invention, and other details not so necessary to understand the present invention are omitted.

In the present application, a portable electronic apparatus in form of mobile phone is mainly taken as an example to describe the embodiments of the present invention. However, it shall be appreciated that the present invention is applicable to not only the mobile phone, but also any electronic apparatus of appropriate type. The interchangeable term "electronic apparatus" and "electronic device" include the portable apparatus. The term "portable apparatus" (also called as "mobile terminal", "portable electronic apparatus" or "portable device") includes any apparatus that has a pluggable memory card, such as mobile phone, Personal Digital Assistant (PDA), MP4, smart phone, etc.

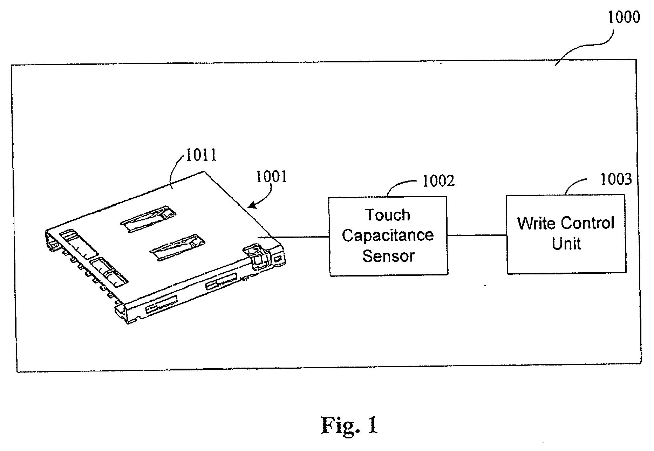

Fig. 1 is a schematic diagram of a mobile phone 1000 according to an embodiment of the present invention, and the mobile phone 1000 is provided with a memory card socket 1001 for accommodating a pluggable memory card. The pluggable memory card for example may be MMC card, SD card, Subscriber Identity Module (SIM) card, various memory sticks or any other type of pluggable memory card that can be used on the mobile phone. The memory card socket 1001 is usually externally provided with a metal shielding structure 1011 such as metal cover for resisting electromagnetic interferences. In conventional design, the memory card socket may be classified as push-pull type and hinge type.

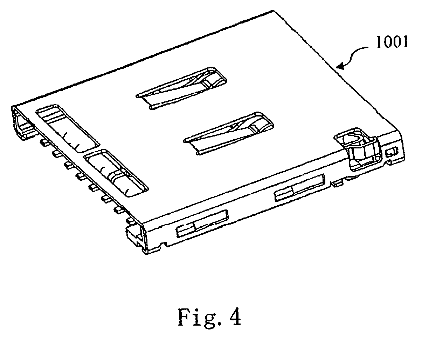

Figs. 4-5 illustrate a perspective view and an exploded view of a structure of a push-pull type memory card socket 1001, respectively. As illustrated in Figs. 4-5, the push-pull type memory card socket 1001 for example includes a plastic card socket frame 1010, a metal cover 1011 for shielding, detection pins 1012 and contact pins 1013. The card socket frame 1010 engages with the metal cover 1011 to form a card slot. The contact pins 1013 are embedded in the card socket frame 1010 and configured to contact the pins on the memory card when the memory card is inserted into the card slot. The detection pins 1012 are fixedly mounted on the card socket frame 1010 to detect whether the memory card is completely inserted into the card socket.

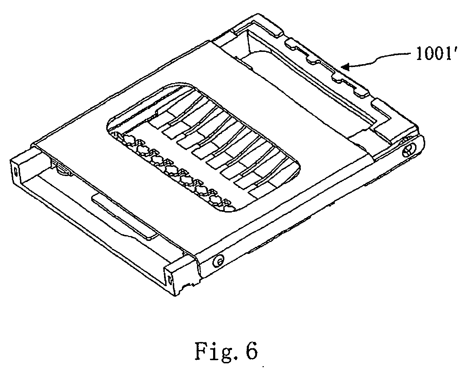

Figs. 6-7 illustrate a perspective view and an exploded view of a structure of a hinge type memory card socket 1001', respectively. As illustrated in Figs. 6-7, the hinge type memory card socket 1001' for example includes a plastic card socket frame 1010', a metal cover 1011' for shielding, contact pins 1013' and lock members 1014'. The contact pins 1013' are embedded in the card socket frame 1010' to contact the pins on the memory card. The card socket frame 1010' is connected to the metal cover 1011' through hinges, so that the metal cover 1011' can be rotated for a certain angle in relation to the card socket frame 1010' to be opened and closed. The lock members 1014' lock the metal cover 1011' in a closed state, so that the metal cover 1011' and the card socket frame 1010' form a card slot for accommodating the memory card. The lock member 1014' is usually made of metal material, and may be integrally formed in the card socket frame by a technology such as metal insert molding. The card socket structures of Figs. 4-7 are just examples. There are various designs for the memory card socket known in the prior art, and herein are not described. A memory card socket, whether currently available or occurring in the future, may be applied to the present invention.

Whether for the push-pull type or hinge type card socket, the user's finger will firstly touch the metal cover on the card socket when the user pulls the memory card. Thus, the memory card has a risk of being pulled out when the user's finger touches the metal cover of the card socket.

In order to prevent the mobile phone still writing data such as application programs into the memory card when the user pulls out the memory card with his fingers, in the embodiment of the present invention, a touch capacitance sensor is adapted to sense whether the metal shielding structure is touched by any finger, and corresponding control is performed according to the sensing result. As illustrated in Fig. 1, the mobile phone 1000 further includes a touch capacitance sensor 1002 and a write control unit 1003. The touch capacitance sensor 1002 is electrically connected to the metal shielding structure 1011 or 1011' on the memory card socket, so as to sense a capacitance generated between the metal shielding structure 1011 or 1011' and a finger, and output the sensed capacitance to the write control unit 1003. When a finger touches the metal shielding structure (e.g., metal cover) 1011 or 1011' on the memory card socket, a capacitance will be generated between the finger and the surface of the metal shielding structure under the human body's electric field, since the subcutaneous tissue of the human body is full of conductive electrolyte. When a finger does not touch the metal shielding structure, the touch capacitance sensor will not sense any capacitance generated by the metal shielding structure and a finger. The present invention judges that a finger touches the memory card socket based on the capacitance generated when the finger touches the metal shielding structure. In brief, in the embodiment of the present invention, the metal shielding structure of the memory card socket is connected to the touch capacitance sensor, thereby forming a capacitance sensing end to sense the capacitance, and determine whether a finger touches the memory card socket according to the sensed capacitance.

The write control unit 1003 determines whether the metal shielding structure 1011 or 1011' is touched by a finger according to a capacitance sensed by the touch capacitance sensor 1002, and prohibits data being written into the memory card when it is determined that the metal shielding structure 1011 or 1011' is touched by a finger. Since the memory card has a risk of being pulled out when the metal shielding structure 1011 or 1011' is touched by a finger, the write control unit 1003 prohibits (including stopping) programs and/or other data being written into the memory card, so as to realize a writing protection of the memory card in the mobile terminal. If the metal shielding structure is not touched by a finger, the memory card will not be pushed or pulled, and then programs and/or other data can be safely written into the memory card. Thus the write control unit 1003 allows data to be written into the memory card when it is determined that the metal shielding structure is not touched by any finger.

Under ideal conditions, when the metal shielding structure is touched by a finger, the touch capacitance sensor can sense a capacitance from the metal shielding structure, and when the metal shielding structure is not touched by a finger, the touch capacitance sensor cannot sense any capacitance, thus the write control unit can determine whether the memory card socket is touched by a finger according to the fact whether the touch capacitance sensor senses a capacitance.

However, in the practical application, the capacitance sensed by the touch capacitance sensor may be influenced by nearby objects (e.g., the wiring and the housing of the mobile phone) other than the human body (e.g., a finger), thus the touch capacitance sensor may detect a small parasitic capacitance even when a finger does not touch the metal shielding structure. Whatever it takes, as compared with the case when a finger does not touch the metal shielding structure, the capacitance sensed by the touch capacitance sensor 1002 is increased when a finger touches the metal shielding structure, i.e., in relation to the previous sensing, the touch capacitance sensor 1002 can sense an increased capacitance from the metal shielding structure 1011 or 1011'. In that case, the write control unit for example may determine whether the metal shielding structure is touched by a finger in the following ways: 1) when a capacitance sensed by the touch capacitance sensor 1002 is larger than a predetermined first threshold, determining that the metal shielding structure is touched by a finger based on the sensed capacitance; or 2) when a variation (increment) of a capacitance currently sensed by the touch capacitance sensor 1002 in relation to the previously sensed capacitance is larger than a predetermined second threshold, determining that the metal shielding structure is touched by a finger. The two determining ways further improve the accuracy of the write control unit to judge whether a finger touches the memory card socket. When a finger touches the metal shielding structure 1011, the capacitance sensed by the touch capacitance sensor 1002 may vary with the factors such as a contact area between the finger and the metal shielding structure, the different finger, etc., so the first threshold may be reasonably determined according to an actual capacitance that may be sensed from the metal shielding structure when the finger touches the metal shielding structure. Similarly, the variation of a capacitance sensed by the touch capacitance sensor when a finger touches the metal shielding structure in relation to a capacitance sensed when a finger does not touch the metal shielding structure may vary with the factors such as a contact area between the finger and the metal shielding structure, the different finger, etc., so the second threshold may be reasonably determined according to the variation of the capacitance on the metal shielding structure caused when a finger touches the metal shielding structure. The above ways of determining a finger's touch on the metal shielding structure are just exemplary, and the present invention is not limited thereto.

When the touch capacitance sensor 1002 does not sense a capacitance generated by the metal shielding structure 1011 and a finger, i.e., the capacitance sensed by the touch capacitance sensor is not larger than the predetermined first threshold, or the increment of the capacitance currently sensed by the touch capacitance sensor in relation to the previously sensed capacitance is not larger than the predetermined second threshold, the capacitance may be just a parasitic capacitance generated by the metal shielding structure and the wiring or the shell, case, etc. The write control unit 1003 may determine that the metal shielding structure is not touched by any finger according to the capacitance sensed by the touch capacitance sensor 1002, and allow data to be written into the memory card.

As described above, in the embodiment of the present invention, the metal shielding structure is used as a sensing end of the capacitance sensor to identify that the metal shielding structure is touched by a finger, based on the capacitance variation caused when the finger touches the metal shielding structure, so as to prohibit (including stopping) data being written into the memory card. That is to say, the present invention effectively provides a writing protection for the pluggable memory card, prevents the damage of the memory card and the non-operation of the application program caused by the data writing error, improves the data writing security of the memory card, and effectively reduces the repair rate of the memory card.

In an embodiment of the present invention, the touch capacitance sensor 1002 and the write control unit 1003 for example may be disposed in a Printed Circuit Board (PCB) of the mobile phone, but not limited thereto.

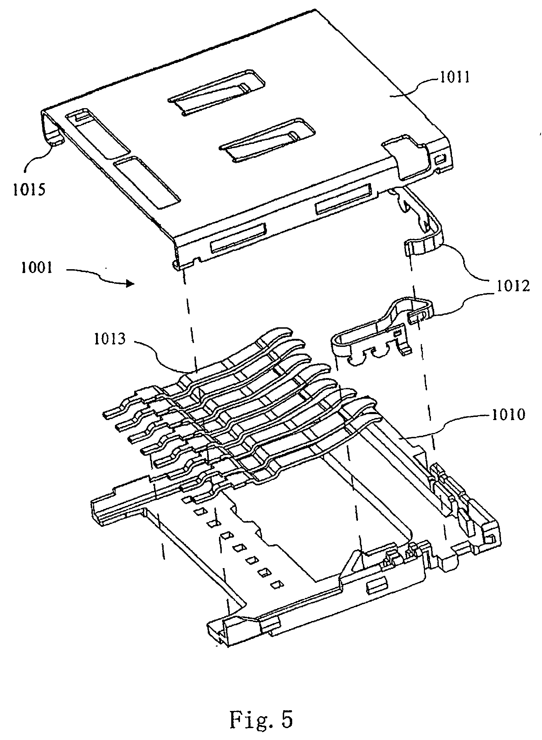

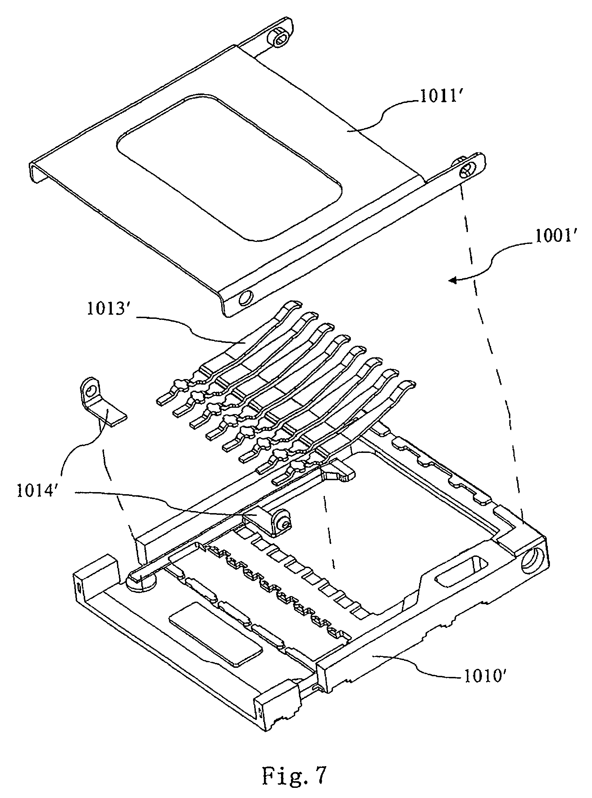

There are many ways for electrically connecting the touch capacitance sensor 1002 to the metal shielding structure 1011. For example, the metal shielding structure 1011 may be welded with the touch capacitance sensor 1002 via a bent portion 1015 on the metal cover as illustrated in Fig. 5, or via a lock member 1014' as illustrated in Fig. 7. The above bent portion 1015 and lock member 1014' are not limited to the positions and shapes as illustrated in Figs. 5 and 7, and the present invention is not limited to connecting the metal shielding structure to the touch capacitance sensor via the bent portion 1015 and the lock member 1014'. Based on the Description, a person skilled in the art will easily conceive of connecting the metal shielding structure to the touch capacitance sensor via any appropriate connector other than the bent portion 1015 and the lock member 1014'.

In an embodiment of the present invention, the touch capacitance sensor 1002 can periodically sense the capacitance. Alternatively, the write control unit 1003 may trigger the touch capacitance sensor 1002 to sense the capacitance when there is data (e.g., programs, applications or other data) to be written into the memory card, determine whether the metal shielding structure on the memory card socket is touched by a finger according to the capacitance sensed by the touch capacitance sensor, and prohibit the data being written into the memory card when it is determined that the metal shielding structure is touched by a finger.

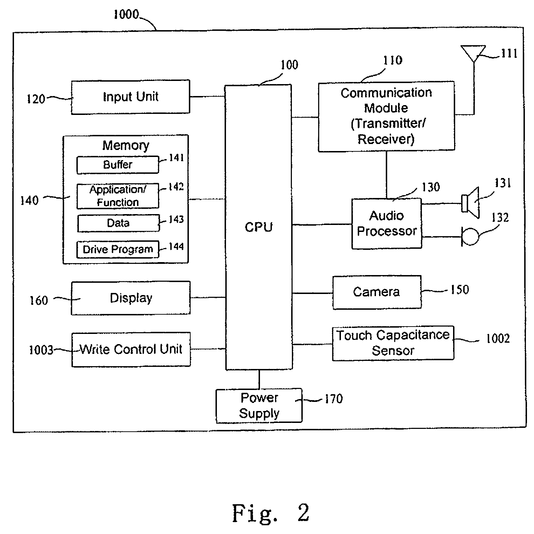

Fig. 2 is a block diagram of a system structure of a mobile phone 1000 according to an embodiment of the present invention, including the aforementioned touch capacitance sensor 1002 and write control unit 1003. The drawing is exemplary, and other type of structure may be adopted to supplement or replace the structure, so as to realize the telecom function or other functions. As illustrated in Fig. 2, the mobile phone 1000 includes a CPU 100, a communication module 110, an input unit 120, an audio processing unit 130, a memory 140, a camera 150, a display 160, a power supply 170, a touch capacitance sensor 1002 and a write control unit 1003. The write control unit 1003 may be connected to the touch capacitance sensor 1002 directly, or via the CPU 100 as illustrated in Fig. 2. The write control unit 1003 may be integrated into the CPU 100. The CPU 100 (sometimes called as controller or operation control, including microprocessor or other processor device and/or logic device) receives an input and controls respective parts and operations of the mobile phone 1000. The input unit 120 provides an input to the CPU 100. The input unit 120 for example may be a keyboard or a touch input device. The camera 150 captures image data and supplies to the CPU 100 for a conventional usage, such as storage, transmission, etc.

The power supply 170 supplies electric power to the mobile phone 1000.

The display 160 displays objects to be displayed such as images and characters. The display for example may be, but not limited to, an LCD display.

The memory 140 is coupled to the CPU 100. The memory 140 for example may be a solid state memory, such as Read Only Memory (ROM), Random Access Memory (RAM), SIM card, etc. The memory 140 also may be a memory which can store information even if the power is off and can be selectively erased and provided with more data, and the example of such a memory is sometimes called as EPROM, etc. The memory 140 also may be other device of a certain type. The memory 140 includes a buffer memory 141 (sometimes called as buffer). The memory 140 may include an application/function storage section 142 that stores application program and function program or performs the operation procedure of the mobile phone 1000 via the CPU 100. The memory 140 may further include a data storage section 143 that stores data such as contact information, digital data, picture, sound and/or any other data used by the mobile phone 1000. A drive program storage section 144 of the memory 140 may include various drive programs of the mobile phone 1000 for performing the communication function and/or other functions (e.g., message transfer application, address list application, etc.) of the mobile phone 1000.

The communication module 110 is a transmitter/receiver 110 that transmits and receives a signal via an antenna 111. The communication module (transmitter/receiver) 110 is coupled to the CPU 100 to provide an input signal and receive an output signal, which may be the same as the situation of the conventional mobile phone. Based on different communication technologies, a same mobile phone may be provided with a plurality of communication modules 110, such as cellular network module, Bluetooth module and/or WLAN module, etc. The communication module (transmitter/receiver) 110 is further coupled to a loudspeaker 131 and a microphone 132 via an audio processor 130 to provide an audio output via the loudspeaker 131, and receive an audio input from the microphone 132, so as to realize the conventional telecom functions. The audio processor 130 may include any appropriate buffer, decoder, amplifier, etc. In addition, the audio processor 130 is coupled to the CPU 100, so that a sound may be recorded in the mobile phone through the microphone 132, and the sound stored in the mobile phone can be played through the loudspeaker 131.

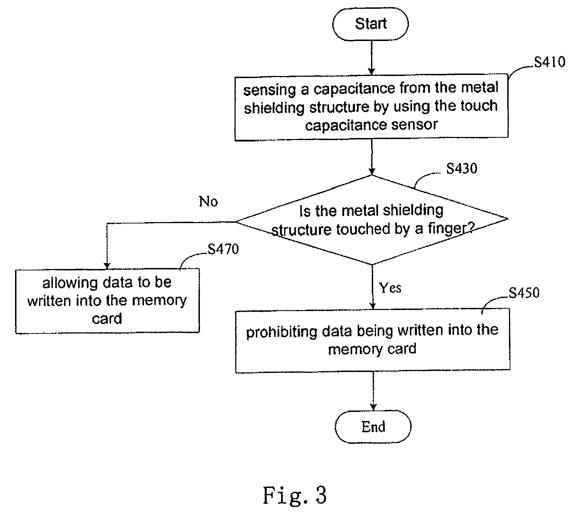

The method of writing protection for the memory card according to the embodiment of the present invention is described as follows in conjunction with the above mobile phone structure. As illustrated in Fig. 3, the writing protection of the memory card can be realized in the following steps.

A capacitance sensing step S410: sensing a capacitance from the metal shielding structure 1011 by using the touch capacitance sensor 1002.

A determining step S430: determining whether the metal shielding structure is touched by a finger according to the capacitance sensed in the capacitance sensing step S410. For example, the determining step S430 determines that the metal shielding structure 1011 is touched by a finger when the capacitance sensed in the capacitance sensing step S410 falls within a first predetermined capacitance range; or determines that the metal shielding structure 1011 is touched by a finger when an increment of the capacitance sensed in the capacitance sensing step S410 in relation to the previously sensed capacitance is larger than a predetermined second threshold.

A writing protection step S450: prohibiting data being written into the memory card when the determining step S430 determines that the metal shielding structure 1011 is touched by a finger.

The method may further include: step S470, allowing data to be written into the memory card when the determining step S430 determines that the metal shielding structure is not touched by a finger. For example, when the touch capacitance sensor 1002 does not sense a capacitance generated between the metal shielding structure 1011 and a finger, i.e., the capacitance sensed by the touch capacitance sensor is not larger than the predetermined first threshold, or the increment of the capacitance currently sensed by the touch capacitance sensor in relation to the previously sensed capacitance is not larger than the predetermined second threshold, the capacitance may be just a parasitic capacitance generated by the metal shielding structure and the wiring or the shell, etc. The determining step S430 may determine that the metal shielding structure is not touched by any finger based on the capacitance sensed by the touch capacitance sensor 1002, and then the data is allowed to be written into the memory card in step S470.

The method of the present invention is not limited to be executed according to the time order as described herein, and can be executed sequentially, concurrently or independently in other time order. Thus, the execution order of the method as described herein does not constitute a limitation to the technical scope of the present invention.

The above descriptions and drawings illustrate various different features of the present invention. It shall be appreciated that a person skilled in the art can implement the above described and illustrated steps and processes by compiling appropriate computer codes.

The embodiments of the present invention are disclosed herein. A person skilled in the art will easily realize that the present invention has other applications under other environments. In fact, many other embodiments and implementations are also existed. The accompanied claims do not intend to limit the scope of the present invention as the above embodiments.

Features described and/or illustrated with respect to one embodiment can be used in one or more other embodiments in a same or similar way, and/or combine with or replace features in other embodiments.

It shall be appreciated that multiple parts of the embodiments of the present invention can be implemented via hardware, software, firmware or a combination thereof. In the above embodiments, multiple steps or methods can be implemented through software or firmware stored in a memory and executable by an appropriate instruction execution system. For example, if the implementation is made through hardware, e.g., in alternate embodiments, the implementation may be made by combining any one or a combination of the following prior arts: discrete logic circuit having logic gate circuit for implementing logic function for digital signal, application specific integrated circuit (ASIC) having appropriate combined logic gate circuit, programmable gate array (PGA), Field Programmable Gate Array (FPGA), etc.

When all or a part of the steps in the above method are implemented by instructing relevant hardware through a program, the program may be stored in a computer readable storage medium, such as ROM/RAM, magnetic disk, optical disk, etc.

Any process or method description or block described in the flowchart or in other way can be understood as including one or more modules, segments or portions for implementing codes of executable instructions in steps of specific logic function or process, and the range of the preferred embodiments further include other implementations, wherein the functions may be executed other than the order illustrated or discussed, including a substantially simultaneous manner based on concerned function or an inverse order, and this shall be appreciated by a person skilled in the art.

The above embodiments make further and detailed descriptions of the object, technical solution and beneficial effect of the present invention. It shall be appreciated that, the above descriptions are just embodiments of the present invention, and do not limit the protection scope of the present invention.

## Claims

1. A mobile terminal (1000) comprising a memory card socket (1001) accommodating a pluggable memory card, the memory card socket (1001) externally provided with a metal shielding structure (1011), wherein the mobile terminal (1000) further comprises:
a touch capacitance sensor (1002) connected to the metal shielding structure (1011) of the memory card socket (1001) and configured to sense a capacitance via the metal shielding structure (1011); and
a write control unit (1003) configured to determine whether the metal shielding structure (1011) is touched by a finger based on the capacitance sensed by the touch capacitance sensor (1002), and prohibit data being written into the memory card when it is determined that the metal shielding structure (1011) is touched by a finger.

2. The mobile terminal (1000) according to claim 1, wherein,
the write control unit (1003) is configured to determine that the metal shielding structure (1011) is touched by a finger when the capacitance sensed by the touch capacitance sensor (1002) is larger than a predetermined first threshold; or
the write control unit (1003) is configured to determine that the metal shielding structure (1011) is touched by a finger when an increment of the capacitance currently sensed by the touch capacitance sensor (1002) in relation to a previously sensed capacitance is larger than a predetermined second threshold.

3. The mobile terminal (1000) according to claim 1 or 2, wherein the write control unit (1003) is further configured to allow data to be written into the memory card when it is determined that the metal shielding structure (1011) is not touched by a finger.

4. The mobile terminal (1000) according to any one of claims 1-3, wherein the touch capacitance sensor (1002) and the write control unit (1003) are disposed in a printed circuit board of the mobile terminal (1000).

5. A method of writing protection for a memory card in a mobile terminal (1000), wherein the method comprising:
a capacitance sensing step: sensing a capacitance via a metal shielding structure (1011) on a card socket of the memory card;
a determining step: determining whether the metal shielding structure (1011) is touched by a finger according to the capacitance sensed in the capacitance sensing step; and
a writing protection step: prohibiting data being written into the memory card when the determining step determines that the metal shielding structure (1011) is touched by a finger.

6. The method according to claim 5, wherein the writing protection step further comprising:
allowing data to be written into the memory card when the determining step determines that the metal shielding structure (1011) is not touched by a finger.

7. The method according to claim 5 or 6, wherein in the determining step, determining that the metal shielding structure (1011) is touched by a finger when the capacitance sensed in the capacitance sensing step is larger than a predetermined first threshold; or
determining that the metal shielding structure (1011) is touched by a finger when an increment of the capacitance sensed in the capacitance sensing step in relation to a previously sensed capacitance is larger than a predetermined second threshold.

8. A memory card socket (1001) adaptive for the mobile terminal (1000) according to any one of claims 1 to 4, comprising:
a card socket frame (1010),
a metal shielding structure (1011), and
contact pins (1013), wherein the contact pins (1013) are embedded in the card socket frame (1010), and wherein the card socket frame (1010) and the metal shielding structure (1011) are oppositely arranged to form a card slot accommodating a memory card; wherein,
the metal shielding structure (1011) is connected to a connector that connects the touch capacitance sensor in the mobile terminal.

9. The memory card socket (1001) according to claim 8, wherein,
the connector is a metal bent portion integrally formed with the metal shielding structure.

10. The memory card socket (1001) according to claim 8 or 9, wherein,
the connector is a metal connector integrally formed with the card socket frame (1010).

## Patentansprüche

1. Mobilendgerät (1000), das einen Speicherkartensockel (1001) umfasst, der eine einsteckbare Speicherkarte aufnimmt, wobei der Speicherkartensockel (1001) extern mit einer Metallabschirmstruktur (1011) versehen ist, wobei das Mobilendgerät (1000) weiter umfasst:
einen Berührungskapazitätssensor (1002), der mit der Metallabschirmstruktur (1011) des Speicherkartensockels (1001) verbunden ist, und zum Erfassen einer Kapazität über die Metallabschirmstruktur (1011) konfiguriert ist; und
eine Schreibsteuereinheit (1003), die konfiguriert ist, zu bestimmen, ob die Metallabschirmstruktur (1011) durch einen Finger berührt wird, basierend auf der durch den Berührungskapazitätssensor (1002) erfassten Kapazität, und zu verhindern, dass in die Speicherkarte Daten geschrieben werden, wenn festgestellt wird, dass die Metallabschirmstruktur (1011) durch einen Finger berührt wird.

2. Mobilendgerät (1000) gemäß Anspruch 1, wobei
die Schreibsteuereinheit (1003) konfiguriert ist, zu bestimmen, dass die Metallabschirmstruktur (1011) durch einen Finger berührt wird, wenn die durch den Berührungskapazitätssensor (1002) erfasste Kapazität größer als ein vorgegebener erster Schwellenwert ist; oder
die Schreibsteuereinheit (1003) konfiguriert ist, zu bestimmen, dass die Metallabschirmstruktur (1011) durch einen Finger berührt wird, wenn ein Anstieg bei der Kapazität, die aktuell durch den Berührungskapazitätssensor (1002) erfasst ist, in Relation zur zuvor erfassten Kapazität, größer als ein vorbestimmter zweiter Schwellenwert ist.

3. Mobilendgerät (1000) gemäß Anspruch 1 oder 2, wobei die Schreibsteuereinheit (1003) weiter konfiguriert ist, zu gestatten, dass Daten in die Speicherkarte geschrieben werden, wenn festgestellt wird, dass die Metallabschirmstruktur (1011) nicht durch einen Finger berührt wird.

4. Mobilendgerät (1000) gemäß einem der Ansprüche 1 bis 3, wobei der Berührungskapazitätssensor (1002) und die Schreibsteuereinheit (1003) auf einer gedruckten Schaltungsplatine des Mobilendgerätes (1000) angeordnet sind.

5. Verfahren für Schreibschutz einer Speicherkarte in einem Mobilendgerät (1000), wobei das Verfahren umfasst:
einen Kapazitätserfassungsschritt: Erfassen einer Kapazität über eine Metallabschirmstruktur (1011) auf einem Kartensockel der Speicherkarte;
einen Bestimmungsschritt: Bestimmen, ob die Metallabschirmstruktur (1011) durch einen Finger berührt wird, anhand der durch den Kapazitätserfassungsschritt erfassten Kapazität; und
einen Schreibschutzschritt: Verhindern, dass Daten auf die Speicherkarte geschrieben werden, wenn der Bestimmungsschritt bestimmt, dass die Metallabschirmstruktur (1011) durch einen Finger berührt wird.

6. Verfahren gemäß Anspruch 5, wobei der Schreibschutzschritt weiter umfasst:
Gestatten, dass Daten in die Speicherkarte geschrieben werden, wenn der Bestimmungsschritt feststellt, dass die Metallabschirmstruktur (1011) nicht durch einen Finger berührt wird.

7. Verfahren gemäß Anspruch 5 oder 6, wobei im Bestimmungsschritt
bestimmt wird, dass die Metallabschirmstruktur (1011) durch einen Finger berührt wird, wenn die im Kapazitätserfassungsschritt erfasste Kapazität größer als ein vorbestimmter erster Schwellenwert ist; oder
bestimmt wird, dass die Metallabschirmstruktur (1011) durch einen Finger berührt wird, wenn ein Inkrement der Kapazität, die im Kapazitätserfassungsschritt erfasst ist, in Relation auf eine zuvor erfasste Kapazität, größer als ein vorbestimmter zweiter Schwellenwert ist.

8. Speicherkartensockel (1001), ausgelegt für das Mobilendgerät (1000) gemäß einem der Ansprüche 1 bis 4, umfassend:
einen Kartensockelrahmen (1010),
eine Metallabschirmstruktur (1011), und
Kontaktstifte (1013), wobei die Kontaktstifte (1013) in den Kartensockelrahmen (1010) eingebettet sind und wobei der Kartensockelrahmen (1010) und die Metallabschirmstruktur (1011) gegenüberliegend angeordnet sind, um einen Kartenschlitz zu bilden, der eine Speicherkarte aufnimmt; wobei
die Metallabschirmstruktur (1011) mit einem Verbinder verbunden ist, der den Berührungskapazitätssensor im Mobilendgerät verbindet.

9. Speicherkartensockel (1001) gemäß Anspruch 8, wobei
der Verbinder ein Metallbiegebereich ist, der integral mit der Metallabschirmstruktur gebildet ist.

10. Speicherkartensockel (1001) gemäß Anspruch 8 oder 9, wobei
der Verbinder ein Metallverbinder ist, der integral mit dem Kartensockelrahmen (1010) gebildet ist.

## Revendications

1. Terminal mobile (1000) comprenant un logement de carte de mémoire (1001) acceptant une carte de mémoire amovible, le logement de carte de mémoire (1001) étant doté extérieurement d'une structure métallique de blindage (1011), le terminal mobile (1000) comprenant en outre :
un capteur de capacité de contact (1002) connecté à la structure métallique de blindage (1011) du logement de carte de mémoire (1001) et configuré pour détecter une capacité via la structure métallique de blindage (1011) ; et
une unité de commande d'écriture (1003) configurée pour déterminer si la structure métallique de blindage (1011) a été touchée par un doigt en fonction de la capacité détectée par le capteur de capacité de contact (1002), et pour interdire l'écriture de données dans la carte de mémoire lorsqu'il a été déterminé que la structure métallique de blindage (1011) a été touchée par un doigt.

2. Terminal mobile (1000) selon la revendication 1, dans lequel :
l'unité de commande d'écriture (1003) est configurée pour déterminer que la structure métallique de blindage (1011) a été touchée par un doigt lorsque la capacité détectée par le capteur de capacité de contact (1002) est supérieure à un premier seuil prédéterminé ; ou
l'unité de commande d'écriture (1003) est configurée pour déterminer que la structure métallique de blindage (1011) a été touchée par un doigt lorsqu'un incrément de la capacité actuellement détectée par le capteur de capacité de contact (1002) est supérieur à un second seuil prédéterminé par rapport à une capacité détectée antérieurement.

3. Terminal mobile (1000) selon la revendication 1 ou 2, dans lequel l'unité de commande d'écriture (1003) est en outre configurée pour permettre l'écriture de données dans la carte de mémoire lorsqu'il est déterminé que la structure métallique de blindage (1011) n'est pas touchée par un doigt.

4. Terminal mobile (1000) selon l'une quelconque des revendications 1 à 3, dans lequel le capteur de capacité de contact (1002) et l'unité de commande d'écriture (1003) sont disposés sur une carte de circuits imprimés du terminal mobile (1000).

5. Procédé de protection en écriture d'une carte de mémoire sur un terminal mobile (1000), le procédé comprenant :
une étape de détection de capacité consistant à détecter une capacité à l'aide d'une structure métallique de blindage (1011) sur un logement de carte de la carte de mémoire ;
une étape de détermination consistant à déterminer si la structure métallique de blindage (1011) est touchée par un doigt à partir de la capacité détectée dans l'étape de détection de capacité ; et
une étape de protection en écriture consistant à interdire que des données soient écrites dans la carte de mémoire lorsque l'étape de détermination détermine que la structure métallique de blindage (1011) est touchée par un doigt.

6. Procédé selon la revendication 5, dans lequel l'étape de protection en écriture comprend également l'étape consistant à :
autoriser l'écriture des données dans la carte de mémoire lorsque l'étape de détermination détermine que la structure métallique de blindage (1011) n'est pas touchée par un doigt.

7. Procédé selon la revendication 5 ou 6, dans lequel l'étape de détermination consiste à :
déterminer que la structure métallique de blindage (1011) est touchée par un doigt lorsque la capacité détectée dans l'étape de détection de capacité est supérieure à un seuil prédéterminé ; ou
déterminer que la structure métallique de blindage (1011) est touchée par un doigt lorsqu'un incrément de la capacité détectée dans l'étape de détection de capacité est supérieur à un second seuil prédéterminé par rapport à une capacité détectée antérieurement.

8. Logement de carte de mémoire (1001) pouvant être adapté pour le terminal mobile (1000) selon l'une quelconque des revendications 1 à 4, comprenant :
un cadre de logement de carte (1010) ;
une structure métallique de blindage (1011) ; et
des broches de contact (1013), les broches de contact (1013) étant noyées dans le cadre de logement de carte (1010), et le cadre de logement de carte (1010) et la structure métallique de blindage (1011) étant opposés l'un à l'autre pour former une fente d'introduction de carte pour y recevoir une carte de mémoire ;
dans lequel la structure métallique de blindage (1011) est connectée à un connecteur qui relie le capteur de capacité de contact sur le terminal mobile.

9. Logement de carte de mémoire (1001) selon la revendication 8, dans lequel :
le connecteur est une partie métallique repliée formée d'une seule pièce avec la structure métallique de blindage.

10. Logement de carte de mémoire (1001) selon la revendication 8 ou 9, dans lequel :
le connecteur est un connecteur métallique formé d'une seule pièce avec le cadre de logement de carte (1010).
